# EUROPEAN PATENT SPECIFICATION

(11) **EP 3 009 117 B1**
(45) Date of publication and mention of the grant of the patent: **04.09.2019**
(21) Application number: 14810720.4
(22) Date of filing: 13.06.2014
(51) Int. Cl.: A61G 7/05, A61G 13/10, B60B 33/00, A61G 1/02

(54) **CASTER DEVICE**
GIESSVORRICHTUNG
DISPOSITIF À ROULETTES

(30) Priority: 14.06.2013 CN 201310237343
(43) Date of publication of application: 20.04.2016
(73) Proprietor: Beijing Aeonmed Co., Ltd., Beijing 100070 (CN)
(72) Inventor: ZHANG, Kai, Beijing 100070 (CN)
(74) Representative: Hoarton, Lloyd Douglas Charles
(86) International application number: PCT/CN2014/079855
(87) International publication number: WO 2014/198234

(56) References cited:
- EP-A2- 0 618 088
- EP-A2- 1 810 652
- CN-A- 102 119 900
- CN-U- 201 612 768
- CN-U- 203 318 039
- CN-Y- 2 474 121
- JP-B2- 3 444 493
- US-A1- 2004 139 545
- US-A1- 2010 122 430
- US-A1- 2010 122 430
- US-A1- 2012 085 595

## Description

### TECHNICAL FIELD OF THE INVENTION

The application relates to the medical field, and particularly, relates to a caster device.

### BACKGROUND OF THE INVENTION

It is usual to adopt a traditional brake system or a central control brake system as the braking equipment being used for a moveable medical device including an operating table, an anaesthesia machine et al.. Compared with the traditional brake system making use of different braking devices to control different casters, the central control brake system adopts a braking device simultaneously controlling the state of several casters including braking and releasing the brake. It is easy convenient to operate the several casters. The central control brake system comprises a double pedal brake system and a single pedal brake system. The double pedal brake system adopts one pedal controlling the casters brakes and the other releasing the casters brakes. The single pedal brake system adopts one pedal controlling the casters brake and releasing the casters brakes with different operation methods, namely when depressing the pedal, the casters have been braked; when returning the pedal, the casters brakes have been released.

For the double pedal brake system, the operator needs to make use of the different pedals to control the casters brakes and release the casters brakes, which enable to make the operator have the confusion that it is difficult to distinguish which pedal is used for controlling the casters brakes and which pedal is used for releasing the casters brakes. This structure accounts for large room and restricts the design of the products. The double pedal brake system also has a deformational structure and it adopts the lever structure controlling the reciprocating rotation of the pedal axis. The operator depresses the different positions of the pedal in order to control the rotation of the pedal axis towards the different directions. Although the structure superficially only has a pedal, in fact it is still seen as double pedals. It is not beneficial for the operator to operate the device and is adverse to the man-machine interaction, layout and the design of the products. For the single pedal central brake system, there are mainly two kinds of current structures: one is the pedal fixed on a hollow pipe, and by rotation of a fixing shaft and a telescopic shaft within the hollow pipe driving the brake components controlling motion of the casters, the brakes of the casters and the release of the brakes of the casters are achieved, this structure can avoid confusion about the pedals. Since the structure of the pedal makes it difficult to perform the action of returning the pedal and the fixing shaft and the telescopic shaft are not positioned axially, these shafts will be separated from the hollow pipe when used for a long time, which will affect the use. The other is a single pedal central brake system having a restoration and reversing mechanism which has a complex structure and the higher fabrication cost. The operator cannot recognize the state of the brake and the releasing brake according to the pedal position.

US 2010/122430 discloses caster device including a caster, a crank shaft, a rotating member, a pushing member and a connecting rod.

### SUMMARY OF THE INVENTION

The purpose of this invention is to at least solve one of the above technical problems to some extent.

Thereby this invention is aimed at providing a caster device with simple structure, easy operation and safe brake.

The present invention provides a caster device as claimed in claim 1. Preferable features are disclosed in the dependent claims.

According to the caster device of one embodiment of the invention, the operator can realize that the first caster and the second caster are braked or released brake via depressing or returning the main pedal, which brings to the advantages of the simple structure, easy operation and the safe brake.

Furthermore, the caster device according to the above mentioned embodiment of the invention may also have the additional technical features as follows:
The caster device according to one embodiment of the invention comprises a third caster, a fourth caster, a first connection shaft and a second connection shaft, wherein a first end of the first connection shaft connects to the first drive shaft rotatably and a second end of the first connection shaft connects to the third caster, a first end of the second connection shaft connects to the second drive shaft rotatably and a second end of the second connection shaft connects to the fourth caster.

According to one example of the invention, the third caster and the fourth caster are both brake casters with brake components, the second end of the first connection shaft connects to the brake components of the third caster rotatably, the second end of the second connection shaft connects to the brake components of the fourth caster rotatably.

The caster device also comprises a auxiliary pedal which connects to the first end of the first drive shaft, the auxiliary pedal and the main pedal both are movable between the brake position and the brake release position synchronously.

According to one example of the invention, the auxiliary pedal comprises a connection element, a button and a shaft sleeve, a first end of the connection element fixedly connects to the first end of the first drive shaft and a second end of the connection element flexibly connects to a second end of the button, the button is installed inside the shaft sleeve and is movable along a vertical direction relative to the shaft sleeve.

According to one example of the invention, the second end of the connection element connects to the second end of the button with pin roll.

According to one example of the invention, the main pedal comprises a pedal bar, a first fulcrum bar connecting to a first end of the pedal bar, a second fulcrum bar connecting to a second end of the pedal bar, a first coupling connecting to the first fulcrum bar and a second coupling connecting to the second fulcrum bar, the second end of the first drive shaft connects to the first coupling and the first end of the second drive shaft connects to the second coupling.

According to one example of the invention, the first drive shaft and the second drive shaft are both hexagonal shafts, the first coupling has a hexagonal socket hole which matches with the first drive shaft, the second coupling has a hexagonal socket hole which matches with the second drive shaft, the second end of the first drive shaft is inserted in and connected to the first coupling and the first end of the second drive shaft is inserted in and connected to the second coupling.

According to one example of the invention, both the first coupling and the second coupling have threaded holes extending through the inner walls of the first coupling and the second coupling. According to one example of the invention, both the first fulcrum bar and the second fulcrum bar are configured as cambered bars.

The invention will present the additional aspects and advantages in the following description, and the partial additional aspects and advantages could become obvious in the following description or learned via the practice of the invention.

### BRIEF DESCRIPTION OF THE DRAWINGS

The above and/or additional aspects and advantages of the invention will become obvious and easy to understand from the description of embodiments with reference to the following drawings, wherein:
Fig. 1 is a scheme diagram illustrating a structure of a caster device according to one embodiment of the invention.
Fig. 2 is a scheme diagram illustrating a structure of a caster device according to another embodiment.
Fig. 3 is a scheme diagram illustrating a main pedal of a caster device according to yet another embodiment of the invention.

### DETAILED DESCRIPTION OF THE EMBODIMENT

Hereinafter, embodiments of the invention are described in detail, examples of which are shown in the drawings, wherein the same or similar labels represent the same or similar components or the components of the same or similar function. The following embodiments described with reference to the drawings are exemplary, which are aimed at explaining the invention rather than restricting the invention,

In the description of the invention, the technical words are "center", "lengthways", "widthways", "length", "width", "thickness", "upper", "lower", "front", "back", "left", "right", "up-down", "horizontal", "top", "bottom", "inner", "outer", "clockwise", "anticlockwise" et al. these words represent orientation or position relationship shown based on the drawings in order to describe the invention and simplify the description only and not to indicate or imply that the indicated device or component must have a specific orientation or be constructed and operated in a specific orientation. Therefore, it is not to be understood as a restriction for the invention.

Also the technical words "first", "second" are only be used for a descriptive purpose, and are not to be understood to indicate or imply the relative importance or imply the number of the indicated technical features. Therefore, features defined with "first", "second" may include one or more of the features explicitly or implicitly. In the description of the invention, "multiple" means two or more than two, unless specifically defined otherwise.

In the invention, the technical words "install", "be linked to", "connect to", "fix" et al. should be understood in generalization, unless specifically defined otherwise. For example, these technical words are described as fixed joint or removable connection or the integration of the connection; or mechanical joint or electrical connection; or direct connection or indirect connection via the middle medium or internal connection between the two components. The skilled persons in the art can understand the specific meaning about these technical words in the invention according to the specific circumstance.

In the invention, unless specifically defined otherwise, the first feature being located on the second feature or under the second feature could disclose the direct connection between the first feature and the second feature, and could also disclose that the first feature is not directly connected to the second feature but adopts other ways to connect to the second feature. Furthermore, the first feature being located "above" and "on" the second feature means that the first feature is located right above the second feature or above the second feature, or only means that the horizontal height of the first feature is higher than that of the second feature. Also the first feature being located "under" and "below" the second feature means that the first feature is located right under the second feature or under the second feature, or only means that the horizontal height of the first feature is lower than that of the second feature.

Hereinafter, a caster device according to one embodiment of the invention will be described with reference to the drawings.

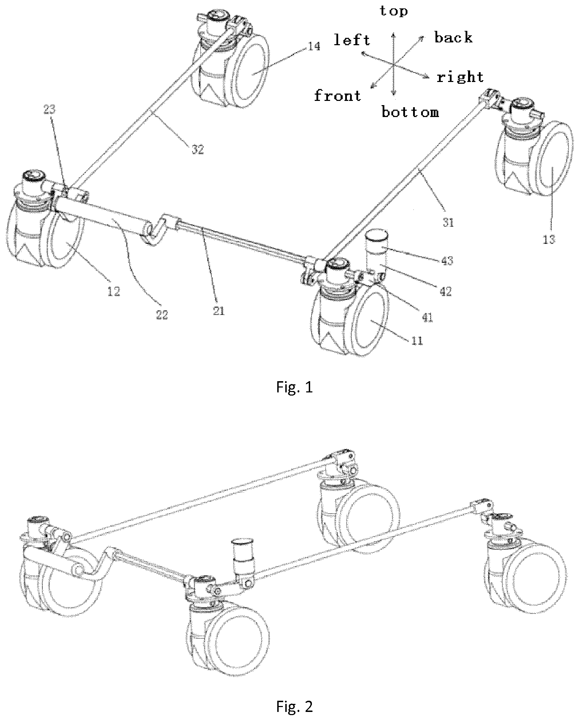

According to the description of the Fig. 1 to the Fig. 3, the caster device according to one embodiment of the invention comprises a first caster 11, a second caster 12 and a stopper component.

Specifically, both the first caster 11 and the second caster 12 are the braked casters with brake components.

The stopper component comprises a first drive shaft 21, a main pedal 22 and a second drive shaft 23. A first end of the first drive shaft 21 (namely the right end of the first drive shaft 21 as shown in the Fig. 1) connects to the brake components of the first caster 11 rotatably. A second end of the first drive shaft 21 (namely the left end of the first drive shaft 21 as shown in the Fig. 1) fixedly connects to a first end of the main pedal 22 (namely the right end of the main pedal 22 as shown in the Fig. 1). A first end of the second drive shaft 23 (namely the right end of the second drive shaft 23 as shown in the Fig. 1) fixedly connects to a second end of the main pedal 22 (namely the left end of the main pedal 22 as shown in the Fig. 1). A second end of the second drive shaft 23 (namely the left end of the second drive shaft 23 as shown in the Fig. 1) connects to the brake components of the second caster 12 rotatably.

The main pedal 22 is movable between a brake position (as shown in Fig. 2) and a brake release position (as shown in Fig. 1). When the main pedal 22 is located in the brake position, the main pedal 22 drives the first drive shaft 21 and the second drive shaft 23 respectively to start the brake components of the first caster 11 and the brake components of the second caster 12 respectively so as to brake the first caster 11 and the second caster 12 respectively.

When being located in the brake release position, the main pedal 22 drives the first drive shaft 21 and the second drive shaft 23 respectively to release the brake components of the first caster 11 and the brake components of the second caster 12 respectively so as to release the first caster 11 and the second caster 12 respectively.

It needs to point out that the persons skilled in the art can understand the brake caster with the brake component means that it can be braked by starting the brake component or roll by releasing the brake component.

According to the caster device of one embodiment of the invention, the operator can realize that the first caster and the second caster are braked or released brake via depressing (namely braking the first caster 11 and the second caster 12) or returning (namely releasing the brake of the first caster 11 and the second caster 12) the main pedal, which brings to the advantages of the simple structure, easy operation and the safe brake.

Advantageously, the caster device according to one embodiment of the invention also comprises a third caster 13, a fourth caster 14, a first connection shaft 31 and a second connection shaft 32. A first end of the first connection shaft 31 (namely the front end of the first connection shaft 31 as shown in Fig. 1) connects to the first drive shaft 21 rotatably. A second end of the first connection shaft 31 (namely the rear end of the first connection shaft 31 as shown in Fig. 1) connects to the third caster 13. A first end of the second connection shaft 32 (namely the front end of the second connection shaft 32 as shown in Fig. 1) connects to the second drive shaft 23rotatably. A second end of the second connection shaft 32 (namely the rear end of the second connection shaft 32 as shown in Fig. 1) connects to the fourth caster 14. Further, as shown in Fig. 1, the third caster 13 and the fourth caster 14 may be both brake casters with brake components. The second end of the first connection shaft 21 connects to the brake components of the third caster 13 rotatably, the second end of the second connection shaft 32 connects to the brake components of the fourth caster 14 rotatably.

That is, the first connection shaft 31 and the first drive shaft 21 constitute the linkage mechanism. The second connection shaft 32 and the second drive shaft 22 constitute the linkage mechanism. The operator can brake the four casters or release the four caster brake via one action in order to have an easy operation.

Both the third caster 13 and the fourth caster 14 may also include the ordinary casters, namely the casters without the brake components. The persons skilled in the art can understand that the operator can brake the four casters or release the four casters brake via one action, restrict movement of the whole machine via brake of two casters in order to have an easy operation.

As shown in the Fig. 1 and Fig. 2, according to an embodiment of the invention, the caster device also comprises a auxiliary pedal. The auxiliary pedal connects to the first end of the first drive shaft 21. The auxiliary pedal and the main pedal 22 both simultaneously move between the brake position and the brake release position.

Advantageously, the auxiliary pedal comprises a connection element 41, a button 42 and a shaft sleeve 43. A first end of the connection element 41 (namely the front-end of the connection element 41 as shown in the Fig. 1) fixedly connects to the first end of the first drive shaft 21. The second end of the connection element 41 (namely the back-end of the connection element 41 as shown in the Fig. 1) flexibly connects to the second end of the button 42 (namely the under-end of the button 42 as shown in the Fig. 1, the up end of the button 42 is a free-end). The button 42 is installed inside the shaft sleeve 43 and is movable along a vertical direction (the arrows point out the up-down direction as shown in the Fig. 1) relative to the shaft sleeve 43.

That is, as shown in the Fig.2, when the operator depresses the main pedal 22 in order to brake the caster device, the button 42 can lift up. As shown in the Fig. 1, when the operator return the main pedal 22 in order to release the caster device, the button can lift down. In other words, the operator can depress the button 42 in order to release the caster device, which makes operations more easy.

Advantageously, the second end of the connection element 41 connects to the second end of the button 42 with pin roll.

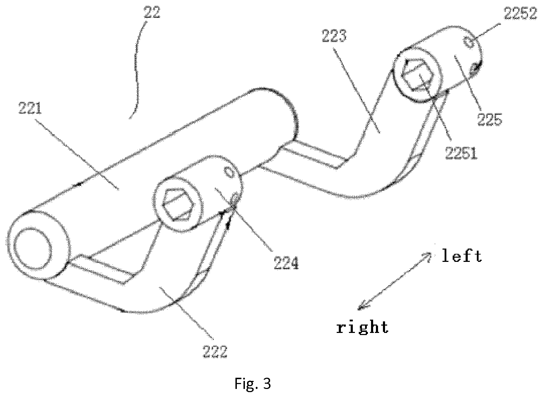

As shown in the Fig. 3, according to an embodiment of the invention, the main pedal 22 includes a pedal bar 221, a first fulcrum bar 222 connecting to a first end of the pedal bar 221 (namely the right end of the pedal bar 221 as shown in the Fig. 3), a second fulcrum bar 223 connecting to a second end of the pedal bar 221 (namely the left end of the pedal bar 221 as shown in the Fig. 3), a first coupling 224 connecting to the first fulcrum bar 221 and a second coupling 225 connecting to the second fulcrum bar 223. The second end of the first drive shaft 21 connects to the first coupling 224. The first end of the second drive shaft 23 connects to the second coupling 225.

Advantageously, the first drive shaft 21 and the second drive shaft 23 are both hexagonal shafts. The first coupling 224 has a hexagonal socket hole which matches with the first drive shaft 21. The second coupling 225 has a hexagonal socket hole which matches with the second drive shaft 23. taking the second coupling 225 as an example, it has a hexagonal socket hole 2251. The second end of the first drive shaft 21 is inserted in and connected to the first coupling 224. The first end of the second drive shaft 23 is inserted in and connected to the second coupling 225. Thereby, installation is convenient and driving is reliable.

Further, both the first coupling 224 and the second coupling 225 have threaded holes extending through the inner walls of the first coupling 224 and the second coupling 225. As an example for the second coupling 225, it has a threaded hole 2252 which passes through the second coupling 225. It is possible to put the bolt into the drive shafts in order to restrict the drive shaft position.

According to an embodiment of the invention, both the first fulcrum bar 222 and the second fulcrum bar 223 are configured as cambered bars. Therefore, it is beneficial to effectively improve the force acted on the pedal bar and make the operation with depressing and returning the pedal more easy to perform. It is more obvious to distinguish the two positions of the main pedal and make the operator recognize the state of braking caster and releasing caster brake more easily.

The caster device according to an embodiment of the invention comprises two pedals, namely a main pedal and an auxiliary pedal. The supporting structure of the main pedal is the cambered structure. One advantage of the cambered structure is to improve the force acted on the pedal, make returning the pedal more easily in order to avoid injuries to the instep of the operator by this action. Another advantage of the cambered structure is that the two positions of the pedal are obvious to be distinguished in order to make the operator judge the state of braking caster and releasing caster brake. By the main pedal connecting the firs drive shaft and the second drive shaft controlling motion of the casters, when the main pedal moves along a vertical direction, the main pedal can drive the two drive shafts such that the brake components connected with the drive shafts brake caster or release caster brake. The auxiliary pedal is installed at the other end of the first drive shaft. It is similar to the button in shape, which is used for releasing caster brake only. When depressing the button type pedal, it is easy to release caster brake by rotating the first drive shaft. The double pedal structure can enlarge the scope of the operation of the operator. It has the advantages of a simple structure, easy fabrication, low cost, easy operation, concise appearance, easy disassembling and assembling, being quick and reliable, good effects.

In the description of the specification, references to the technical words "an embodiment", "some embodiments", "an example", "a specific example" or "some examples" et al. mean that specific features, structures, materials or characteristics described in combination with the embodiment or example are embodied in at least one embodiment or example of the invention. In the specification, the schematic expressions of these technical words do not necessarily refer to the same embodiment or example. Furthermore, the described specific features, structures, materials or characteristics may be combined within any of one or more embodiments or examples in a suitable manner.

Although embodiments of the invention have been illustrated and described in the above, it is to be understood that the above mentioned embodiments are exemplary rather than the limitation of the invention. Those skilled in the art may make changes, alterations, substitution and modifications to the above mentioned embodiments within the scope of the invention and without departing from the scope of the invention as defined by the appended claims.

## Claims

1. A caster device comprising:
a first caster (11) and a second caster (12), both of which are braked casters with brake components; and
a stopper component, comprising a first drive shaft (21), a main pedal (22) and a second drive shaft (23), wherein:
the first drive shaft (21) rotatably connects to the brake components of the first caster (11) and a second end of the first drive shaft (21) fixedly connects to a first end of the main pedal (22), a first end of the second drive shaft (23) fixedly connects to a second end of the main pedal (22) and a second end of the second drive shaft (23) rotatably connects to the brake components of the second caster (12);
the main pedal (22) is movable between a brake position and a brake release position;
when the main pedal (22) is in the brake position, the main pedal (22) drives the first drive shaft (21) and the second drive shaft (23) respectively to start the brake components of the first caster (11) and the brake components of the second caster (12) respectively so as to brake the first caster (11) and the second caster (12) respectively; and
when the main pedal (22) is in the brake release position, the main pedal (22) drives the first drive shaft (21) and the second drive shaft (23) respectively to release the brake components of the first caster (11) and the brake components of the second caster (12) respectively so as to release the first caster (11) and the second caster (12) respectively;
the caster device further comprising a third caster (13), a fourth caster (14), a first connection shaft (31) and a second connection shaft (32), wherein:
a first end of the first connection shaft (31) rotatably connects to the first drive shaft (21), and a second end of the first connection shaft (31) connects to the third caster (13); and
a first end of the second connection shaft (32) rotatably connects to the second drive shaft (23) and a second end of the second connection shaft (32) connects to the fourth caster (14);
the caster device further comprising an auxiliary pedal which connects to a first end of the first drive shaft (21), wherein both the auxiliary pedal and the main pedal (22) are synchronously movable between the brake position and the brake release position and wherein when the main pedal (22) is in the brake position, the auxiliary pedal is operable to be depressed and rotate the first drive shaft (21) to release the brake components of the first caster (11) and the second caster (12).

2. The caster device according to claim 1, wherein:
the third caster (13) and the fourth caster (14) are both brake casters with brake components,
the second end of the first connection shaft (31) rotatably connects to the brake components of the third caster (13), and
the second end of the second connection shaft (32) rotatably connects to the brake components of the fourth caster (14).

3. The caster device according to claim 1, wherein the auxiliary pedal comprises a connection element (41), a button (42) and a shaft sleeve (43), and wherein:
a first end of the connection element (41) fixedly connects to the first end of the first drive shaft (21) and a second end of the connection element (41) flexibly connects to a second end of the button (42); and
the button (42) is installed inside the shaft sleeve (43) and is movable along a vertical direction relative to the shaft sleeve (43).

4. The caster device according to claim 3, wherein the second end of the connection element (41) connects to the second end of the button (42) with a pin roll.

5. The caster device according to claim 3, wherein the main pedal (22) comprises
a pedal bar (221),
a first fulcrum bar (222) connecting to a first end of the pedal bar (221);
a second fulcrum bar (223) connecting to a second end of the pedal bar (221);
a first coupling (224) connecting to the first fulcrum bar (222); and
a second coupling (225) connecting to the second fulcrum bar (223),
wherein the second end of the first drive shaft (21) connects to the first coupling (224) and the first end of the second drive shaft (23) connects to the second coupling (225).

6. The caster device according to claim 5, wherein:
the first drive shaft (21) and the second drive shaft (23) are both hexagonal shafts;
the first coupling (224) has a hexagonal socket hole which matches with the first drive shaft (21);
the second coupling (225) has a hexagonal socket hole (2251) which matches with the second drive shaft (23);
the second end of the first drive shaft (21) is inserted in and connected to the first coupling (224); and
the first end of the second drive shaft (23) is inserted in and connected to the second coupling (225).

7. The caster device according to claim 6, wherein both the first coupling (224) and the second coupling (225) have threaded holes (2252) extending through the inner walls of the first coupling (224) and the second coupling (225).

8. The caster device according to claim 5, wherein both the first fulcrum bar (222) and the second fulcrum bar (223) are configured as cambered bars.

9. The caster device according to any preceding claim, wherein the auxiliary pedal comprises a connection element (41), a button (42) and a shaft sleeve (43).

## Patentansprüche

1. Laufrollenvorrichtung, umfassend:
Eine erste Laufrolle (11) und eine zweite Laufrolle (12), beide davon sind gebremste Laufrollen mit Bremskomponenten; und
eine Stopper-Komponente, die eine erste Antriebswelle (21), eine Hauptpedale (22) und eine zweite Antriebswelle (23) umfasst, wobei:
die erste Antriebswelle (21) drehbar mit den Bremskomponenten der ersten Laufrolle (11) verbunden ist und sich ein zweites Ende der ersten Antriebswelle (21) fest mit einem ersten Ende der Hauptpedale (22) verbindet, sich ein erstes Ende der zweiten Antriebswelle (23) fest mit einem zweiten Ende der Hauptpedale (22) verbindet und sich ein zweites Endes der zweiten Welle (23) drehbar mit den Bremskomponenten der zweiten Laufrolle (12) verbindet;
die Hauptpedale (22) zwischen einer Bremsposition und einer Bremsfreigabeposition beweglich ist;
wenn sich das Hauptpedal (22) in der Bremsposition befindet, treibt das Hauptpedal (22) die erste Antriebswelle (21) bzw. die zweite Antriebswelle (23) an, um die Bremskomponenten der ersten Laufrolle (11) bzw. die Bremskomponenten der zweiten Laufrolle (12)zu starten, um die erste Laufrolle (11) bzw. die zweite Laufrolle (12) zu bremsen; und
wenn sich das Hauptpedal (22) in der Bremsfreigabeposition befindet, treibt das Hauptpedal (22) die erste Antriebswelle (21) bzw. die zweite Antriebswelle (23) an, um die Bremskomponenten der ersten Laufrolle (11) bzw. die Bremskomponenten der zweiten Laufrolle (12) zu starten, um die erste Laufrolle (11) bzw. die zweite Laufrolle (12) freizugeben;
wobei die Laufrollenvorrichtung ferner eine dritte Laufrolle (13), eine vierte Laufrolle (14), eine erste Verbindungswelle (31) und eine zweite Verbindungswelle (32) umfasst, wobei:
Sich ein erstes Ende der ersten Verbindungswelle (31) drehbar mit der ersten Antriebswelle (21) verbindet, und sich ein zweites Ende der ersten Verbindungswelle (31) mit der dritten Laufrolle (13) verbindet; und
sich ein erstes Ende der zweiten Verbindungswelle (32) drehbar mit der zweiten Antriebswelle (23) verbindet und sich ein zweites Ende der zweiten Verbindungswelle (32) mit der vierten Laufrolle (14) verbindet;
wobei die Laufrollenvorrichtung ferner eine Hilfspedale umfasst, die sich mit einem ersten Ende der ersten Antriebswelle (21) verbindet, wobei sowohl die Hilfspedale als auch die Hauptpedale (22) synchron zwischen der Bremsposition und der Bremsfreigabeposition beweglich sind und wobei, wenn sich die Hauptpedale (22) in der Bremsposition befindet, die Hilfspedale betreibbar niedergedrückt zu werden und die erste Antriebswelle (21) zu drehen, um die Bremskomponenten der ersten Laufrolle (11) und der zweiten Laufrolle (12) freizugeben.

2. Laufrollenvorrichtung nach Anspruch 1, wobei:
Die dritte Laufrolle (13) und die vierte Laufrolle (14) beide Bremslaufrollen mit Bremskomponenten sind,
sich das zweite Ende der ersten Verbindungswelle (31) drehbar mit den Bremskomponenten der dritten Laufrolle (13) verbindet, und
sich das zweite Ende der zweiten Verbindungswelle (32) drehbar mit den Bremskomponenten der vierten Laufrolle (14) verbindet.

3. Laufrollenvorrichtung nach Anspruch 1, wobei die Hilfspedale ein Verbindungselement (41), einen Knopf (42) und eine Wellenmuffe (43) umfasst, und wobei:
Sich ein erstes Ende des Verbindungselements (41) fest mit dem ersten Ende der ersten Antriebswelle (21) verbindet und sich ein zweites Ende des Verbindungselements (41) flexibel mit einem zweiten Ende des Knopfes (42) verbindet; und
der Knopf (42) im Innern der Wellenmuffe (43) installiert ist und entlang einer vertikalen Richtung relativ zur Wellenmuffe (43) beweglich ist.

4. Laufrollenvorrichtung nach Anspruch 3, wobei sich das zweite Ende des Verbindungselements (41) mit dem zweiten Ende des Knopfes (42) mit einer Stiftrolle verbindet.

5. Laufrollenvorrichtung nach Anspruch 3, wobei die Hauptpedale (22) umfasst:
Eine Pedalstange (221),
eine erste Drehpunktstange (222), die sich mit einem ersten Ende der Pedalstange (221) verbindet;
eine zweite Drehpunktstange (223), die sich mit einem zweiten Ende der Pedalstange (221) verbindet;
eine erste Kopplung (224), die sich mit der ersten Drehpunktstange (222) verbindet; und
eine zweite Kopplung (225), die sich mit der zweiten Drehpunktstange (223) verbindet, wobei sich das zweite Ende der ersten Antriebswelle (21) mit der ersten Kopplung (224) verbindet und sich das erste Ende der zweiten Antriebswelle (23) mit der zweiten Kopplung (225) verbindet.

6. Laufrollenvorrichtung nach Anspruch 5, wobei:
die erste Antriebswelle (21) und die zweite Antriebswelle (23) beide hexagonale Wellen sind;
die erste Kopplung (224) ein hexagonales Aufnahmeloch aufweist, das der ersten Antriebswelle (21) entspricht;
die zweite Kopplung (225) ein hexagonales Aufnahmeloch (2251) aufweist, das der zweiten Antriebswelle (23) entspricht;
das zweite Ende der ersten Antriebswelle (21) in die erste Kopplung (224) eingeschoben und damit verbunden wird; und
das erste Ende der zweiten Antriebswelle (23) in die zweite Kopplung (225) eingeschoben und damit verbunden wird.

7. Laufrollenvorrichtung nach Anspruch 6, wobei sowohl die erste Kopplung (224) als auch die zweite Kopplung (225) Gewindelöcher (2252) aufweisen, die sich durch die Innenwände der ersten Kopplung (224) und der zweiten Kopplung (225) erstrecken.

8. Laufrollenvorrichtung nach Anspruch 5, wobei sowohl die erste Drehpunktstange (222) als auch die zweite Drehpunktstange (223) als gewölbte Stangen konfiguriert sind.

9. Laufrollenvorrichtung nach einem vorhergehenden Anspruch, wobei die Hilfspedale ein Verbindungselement (41), einen Knopf (42) und eine Wellenmuffe (43) umfasst.

## Revendications

1. Dispositif à roulettes, comprenant :
une première roulette (11) et une deuxième roulette (12), étant l'une et l'autre des roulettes freinées avec des composants de frein ; et
un composant d'arrêt, comprenant un premier arbre de transmission (21), une pédale principale (22) et un second arbre de transmission (23), et dans lequel :
le premier arbre de transmission (21) est lié en rotation aux composants de freinage de la première roulette (11) et une seconde extrémité du premier arbre de transmission (21) est liée fixe à une première extrémité de la pédale principale (22), une première extrémité du second arbre de transmission (23) est liée fixe à une seconde extrémité de la pédale principale (22) et une seconde extrémité du second arbre de transmission (23) est liée en rotation aux composants de freinage de la deuxième roulette (12) ;
la pédale principale (22) est mobile entre une position de freinage et une position de desserrage de frein ;
quand la pédale principale (22) est dans la position de freinage, la pédale principale (22) entraîne respectivement le premier arbre de transmission (21) et le second arbre de transmission (23) pour démarrer respectivement les composants de freinage de la première roulette (11) et les composants de freinage de la seconde roulette (12) de manière à freiner respectivement la première roulette (11) et la seconde roulette (12) ; et
quand la pédale principale (22) est dans la position de desserrage de frein, la pédale principale (22) entraîne respectivement le premier arbre de transmission (21) et le second arbre de transmission (23) pour desserrer respectivement les composants de freinage de la première roulette (11) et les composants de freinage de la seconde roulette (12) de manière à desserrer respectivement la première roulette (11) et la seconde roulette (12) ;
le dispositif à roulettes comprenant en outre une troisième roulette (13), une quatrième roulette (14), un premier arbre de liaison (31) et un second arbre de liaison (32), et dans lequel :
une première extrémité du premier arbre de liaison (31) est liée en rotation au premier arbre de transmission (21), et une seconde extrémité du premier arbre de liaison (31) est liée à la troisième roulette (13) ; et
une première extrémité du second arbre de liaison (32) est liée en rotation au second arbre de transmission (23), et une seconde extrémité du second arbre de liaison (32) est liée à la quatrième roulette (14) ;
le dispositif à roulettes comprenant en outre une pédale auxiliaire qui est liée à une première extrémité du premier arbre de transmission (21), la pédale auxiliaire et la pédale principale (22) étant mobiles de manière synchrone entre la position de freinage et la position de desserrage de frein, et quand la pédale principale (22) est dans la position de freinage, la pédale auxiliaire pouvant être enfoncée et pouvant faire tourner le premier arbre d'entraînement (21) pour desserrer les composants de freinage de la première roulette (11) et de la deuxième roulette (12).

2. Dispositif à roulettes selon la revendication 1, dans lequel :
la troisième roulette (13) et la quatrième roulette (14) sont toutes les deux des roulettes freinées avec des composants de freinage,
la seconde extrémité du premier arbre de liaison (31) est connectée en rotation aux composants de freinage de la troisième roulette (13), et
la seconde extrémité du second arbre de liaison (32) est connectée en rotation aux composants de freinage de la quatrième roulette (14).

3. Dispositif à roulettes selon la revendication 1, dans lequel la pédale auxiliaire comprend un élément de liaison (41), un bouton (42) et une chemise d'arbre (43), et dans lequel :
une première extrémité de l'élément de liaison (41) est liée fixe à la première extrémité du premier arbre de transmission (21), et une seconde extrémité de l'élément de liaison (41) est liée fixe à une seconde extrémité du bouton (42) ; et
le bouton (42) est installé à l'intérieur de la chemise d'arbre (43) et est mobile le long d'une direction verticale par rapport à la chemise d'arbre (43).

4. Dispositif à roulettes selon la revendication 3, dans lequel la seconde extrémité de l'élément de liaison (41) est connectée à la seconde extrémité du bouton (42) avec une goupille élastique.

5. Dispositif à roulettes selon la revendication 3, dans lequel la pédale principale (22) comprend :
une tige de pédale (221),
une première tige d'articulation (222) liée à une première extrémité de la tige de pédale (221) ;
une seconde tige d'articulation (223) liée à une seconde extrémité de la tige de pédale (221) ;
un premier accouplement (224) connecté à la première tige d'articulation (222) ; et
un second accouplement (225) connecté à la seconde tige d'articulation (223), la seconde extrémité du premier arbre de transmission (21) étant connectée au premier accouplement (224) et la première extrémité du second arbre de transmission (23) étant connectée au second accouplement (225).

6. Dispositif à roulettes selon la revendication 5, dans lequel :
le premier arbre de transmission (21) et le second arbre de transmission (23) sont l'un et l'autre des arbres hexagonaux ;
le premier accouplement (224) a un trou à six pans qui concorde avec le premier arbre de transmission (21) ;
le second accouplement (225) a un trou à six pans (2251) qui concorde avec le second arbre de transmission (23) ;
la seconde extrémité du premier arbre de transmission (21) est insérée dans le premier accouplement (224) et liée à celui-ci ; et
la première extrémité du second arbre de transmission (23) est insérée dans le second accouplement (225) et liée à celui-ci.

7. Dispositif à roulettes selon la revendication 6, dans lequel le premier accouplement (224) et le second accouplement (225) ont des trous filetés (2252) s'étendant dans les parois intérieures du premier accouplement (224) et du second accouplement (225).

8. Dispositif à roulettes selon la revendication 5, dans lequel la première tige d'articulation (222) et la seconde tige d'articulation (223) sont l'une et l'autre configurées comme des tiges cambrées.

9. Dispositif à roulettes selon l'une quelconque des revendications précédentes, dans lequel la pédale auxiliaire comprend un élément de liaison (41), un bouton (42) et une chemise d'arbre (43).
